# EUROPÄISCHE PATENTSCHRIFT

(11) **EP 2 730 019 B1**
(45) Veröffentlichungstag und Bekanntmachung des Hinweises auf die Patenterteilung: **09.09.2015**
(21) Anmeldenummer: 12731419.3
(22) Anmeldetag: 28.06.2012
(51) Int. Cl.: H02J 3/24, H02M 7/487, H02M 7/5387

(54) **BETRIEBSVERFAHREN FÜR EINEN WECHSELRICHTER UND NETZFEHLERTOLERANTER WECHSELRICHTER**
OPERATING METHOD FOR AN INVERTER AND NETWORK FAULT-TOLERANT INVERTER
PROCÉDÉ POUR FAIRE FONCTIONNER UN ONDULEUR ET ONDULEUR TOLÉRANT AUX PANNES DE SECTEUR

(30) Priorität: 04.07.2011 DE 102011051548
(43) Veröffentlichungstag der Anmeldung: 14.05.2014
(73) Patentinhaber: SMA Solar Technology AG, 34266 Niestetal (DE)
(72) Erfinder: CORREA VASQUEZ, Pablo, 34233 Fuldatal (DE); MÜLLER, Tobias, 34355 Escherode (DE); WOLF, Henrik, 34123 Kassel (DE)
(74) Vertreter: Lahnor, Peter
(86) Internationale Anmeldenummer: PCT/EP2012/062562
(87) Internationale Veröffentlichungsnummer: WO 2013/004585

(56) Entgegenhaltungen:
- EP-A1- 2 107 672
- CN-A- 102 074 974
- JP-A- 11 252 970

## Beschreibung

Die Erfindung betrifft ein Verfahren zum Betreiben eines Wechselrichters mit mindestens einer moduliert ansteuerbaren Brückenanordnung zur Einspeisung von elektrischer Leistung in ein Energieversorgungsnetz. Die Erfindung betrifft weiterhin einen netzfehlertoleranten Wechselrichter. Die veröffentlichte europäische Patentanmeldung EP 2107672 A1 offenbart einen Wechselrichter zur Einspeisung elektrischer Leistung in ein Energierversorgungsnetz.

Wechselrichter dienen der Umwandlung von Gleichstrom, beispielsweise erzeugt von einem Photovoltaikgenerator einer Photovoltaikanlage, in einen zur Einspeisung in ein Energieversorgungsnetz geeigneten Wechselstrom. Angesichts der zunehmenden Verbreitung von regenerativen Energieerzeugungsanlagen, insbesondere Photovoltaikanlagen, steigen die Anforderung der Energieversorgungsunternehmen an Parameter des eingespeisten Stroms. Seitens der Betreiber der Energieversorgungsnetze besteht häufig die in den sogenannten Netzanschlussrichtlinien (Grid Code) spezifizierte Anforderung, das regenerative Energieerzeugungsanlagen bei Netzstörung, zum Beispiel bei Spannungseinbrüchen, nicht wie in der Vergangenheit üblich abgeschaltet werden, sondern in der Lage sein müssen, die Netzstörung zu durchfahren (Fault-Ride-Through - FRT). Auf diese Weise kann zum einen am Ende der Netzstörung möglichst unmittelbar wieder Leistung in das Energieversorgungsnetz eingespeist werden und zum anderen kann während des Netzfehlers durch Einspeisung von Blindstrom das Energieversorgungsnetz bezüglich seiner Spannung gestützt werden. Ein Netzfehler liegt beispielsweise vor, wenn die Amplitude oder der Effektivwert einer einphasigen Netzspannung unterhalb eines Mindestwertes liegt. Bei mehrphasigen Energieversorgungsunternehmen kann eine analoge Definition zum Beispiel anhand der Amplitudenmittelwerte der einzelnen Phasen erfolgen. Aufgrund der in einem solchen Fall deutlich reduzierten Netzspannung ist zur Erzeugung des geforderten Blind- und/oder Wirkstroms nur eine kleine effektive Ausgangsspannung der Wechselrichter notwendig.

Wechselrichter weisen üblicherweise mindestens eine Brückenanordnung auf, über die mittels Halbleiterleistungsschaltern ein wechselspannungsseitiger Ausgang des Wechselrichters alternierend auf mindestens zwei verschiedene Gleichspannungspotenziale geschaltet werden kann. Zur Steuerung der Höhe der Ausgangsspannung sowie zur Einstellung des gewünschten möglichst sinusförmigen Verlaufes der Ausgangsspannung wird üblicherweise ein Pulsweitenmodulationsverfahren (PWM) eingesetzt. Eine gute Umwandlungseffizienz lässt sich mit sogenannten Multilevel-Wechselrichtern erreichen, bei denen Halbleiterleistungsschalter so angeordnet sind, dass mehr als zwei verschiedene Spannungsniveaus am wechselspannungsseitigen Ausgang schaltbar sind (Multilevel-Modulation, z.B. 3-Level Modulation). Zur Ansteuerung der auf sehr unterschiedlichen Gleichspannungspotenzialen liegenden Halbleiterleistungsschalter der Brückenanordnung sind entsprechend Ansteuersignale auf ebenfalls sehr unterschiedlichen Gleichspannungspotenzialen notwendig. Zu diesem Zweck werden an einer Ansteuerschaltung häufig sogenannte Bootstrap-Kondensatoren eingesetzt, in denen das gewünschte Potenzial für die Ansteuerung der Halbleiterleistungsschalter aufgebaut wird. Dabei werden insbesondere die Bootstrap-Kondensatoren, die zur Bereitstellung der Energie für die Ansteuerung der auf hohem positivem Potenzial liegenden Leistungshalbleiterschalter (high-side Schalter) vorgesehen sind, während der An-Zeit der auf niedrigerem Potential liegenden Halbleiterleistungsschalter (low-side Schalter) der Brückenanordnung aufgeladen.

Während des Durchfahrens einer Netzstörung kann jedoch der Aussteuergrad, d.h. das Verhältnis der Längen der Zeiträume, die ein Halbleitungsleistungsschalter angesteuert ist, zu den Zeiträumen, in denen er nicht angesteuert ist, so klein werden, dass die Bootstrap-Kondensatoren nicht ausreichend nachgeladen werden. Als Folge davon können die über diese Bootstrap-Kondensatoren angesteuerten Halbleiterleistungsschalter nicht mehr geschaltet werden. Eine Lösung für dieses Problem kann dadurch erreicht werden, dass Bootstrap-Kondensatoren mit einer entsprechend höheren Kapazität eingesetzt werden, so dass eine Ansteuerung über den erforderlichen Zeitraum des FRT auch bei vorübergehend nur geringer oder fehlender Nachladung der Bootstrap-Kondensatoren erfolgen kann. Der Einsatz von Bootstrap-Kondensatoren mit höherer Kapazität ist jedoch angesichts der höheren Kosten und des mit ihnen verbundenen größeren Platzbedarfs nicht wünschenswert.

Es ist daher eine Aufgabe der vorliegenden Erfindung, ein Verfahren für den Betrieb eines Wechselrichters anzugeben, mit dem die genannten Probleme der nicht ausreichenden Ladung von Bootstrap-Kondensatoren gelöst werden können, ohne dass Bootstrap-Kondensatoren mit einer höheren Kapazität eingesetzt werden müssen. Es ist eine weitere Aufgabe, einen durch ein solches Betriebsverfahren netzfehlertoleranten Wechselrichter anzugeben.

Diese Aufgabe wird gelöst durch ein Verfahren bzw. einen Wechselrichter mit den jeweiligen Merkmalen der unabhängigen Ansprüche.

Ein anmeldungsgemäßes Verfahren zum Betreiben eines Wechselrichters der eingangs genannten Art weist die folgenden Schritte auf. Der Wechselrichter wird durch unipolares Ansteuern der mindestens einen Brückenanordnung betrieben und das Energieversorgungsnetz wird auf das Vorliegen eines Netzfehlers überwacht. Der Wechselrichter wird dann zumindest zeitweise durch bipolares Ansteuern der mindestens einen Brückenanordnung betrieben, falls ein Netzfehler detektiert wird.

Bei einer bipolaren Ansteuerung, wie sie beispielsweise bei einer 2-Level-Modulation vorliegt, wird bei einem niedrigen Aussteuergrad eine geringe Ausgangsspannung der Brückenanordnung dadurch erreicht, dass der high-side Brückenschalter und der low-side Brückenschalter abwechselnd leitend geschaltet werden. Die mittlere Höhe der Ausgangsspannung ergibt sich aus dem Zeitverhältnis der Einschaltdauern der beiden Brückenschalter, auch Tastverhältnis genannt. Bei nur geringer Ausgangsspannung weicht das Tastverhältnis nur wenig von dem Wert 1:1 ab. Pro Taktperiode ist also der low-side Brückenschalter im Mittel in etwa für die Dauer einer halbe Taktperiode leitend. Die bipolare Ansteuerung resultiert daher auch bei geringem Aussteuergrad in im Mittel ausreichend langen Zeiten zur Ladung von Bootstrap-Kondensatoren. Auf den Einsatz von Bootstrap-Kondensatoren einer größeren Kapazität, durch die auch bei zu kleiner laufender Nachladung die Ansteuerung zumindest eine Zeit lang aufrecht gehalten werden kann, kann verzichtet werden.

In einer vorteilhaften Ausgestaltung des Verfahrens wird der Wechselrichter für einen Zeitraum, währenddessen das Vorliegen des Netzfehlers detektiert wird, durch bipolares Ansteuern der mindestens einen Brückenanordnung betrieben. Bei dieser Ausgestaltung des Verfahrens wird der Wechselrichter für die gesamte Dauer eines detektierten Netzfehlers mit bipolarer Ansteuerung betrieben, wodurch die ausreichende Ladung der Bootstrap-Kondensatoren gesichert ist.

In einer weiteren vorteilhaften Ausgestaltung des Verfahrens wird der Wechselrichter für einen Zeitraum, währenddessen das Vorliegen des Netzfehlers detektiert wird, alternierend durch unipolares und bipolares Ansteuern der mindestens einen Brückenanordnung betrieben. Diese Ausgestaltung bietet einen Kompromiss zwischen einem gesicherten Nachladen der Bootstrap-Kondensatoren in der Phase des bipolaren Ansteuerns und einem möglichst effektiven Betreiben des Wechselrichters in der Phase des unipolaren Ansteuerns, wie es beispielsweise bei einer 3-Level Modulation vorliegt.

In einer weiteren vorteilhaften Ausgestaltung des Verfahrens wird das Vorliegen des Netzfehlers abhängig von einer Höhe eines Effektivwertes einer Netzspannung des Energieversorgungsnetzes detektiert. Der Effektivwert der Netzspannung wirkt sich unmittelbar auf den Aussteuergrad der Brückenschalter der Brückenanordnung aus und stellt daher ein geeignetes Kriterium für die Umschaltung zwischen einer unipolaren und einer bipolaren Ansteuerung der Brückenschalter dar.

Weitere vorteilhafte Ausgestaltungen des Verfahrens sind Gegenstand der abhängigen Ansprüche.

Ein anmeldungsgemäßer netzfehlertoleranter Wechselrichter zur Einspeisung von elektrischer Leistung in ein Energieversorgungsnetz weist mindestens eine Brückenanordnung mit Brückenschaltern auf und mindestens eine Bootstrap-Schaltung mit einem Bootstrap-Kondensator zum Bereitstellen von Energie zur Ansteuerung von mindestens einem der Brückenschalter. Er umfasst weiter eine Pulsweiten-Modulationsschaltung zum wahlweise unipolaren oder bipolaren Ansteuern der mindestens einen Brückenanordnung und eine Überwachungseinrichtung zur Detektion von Netzfehlern. Der Wechselrichter zeichnet sich dadurch aus, dass er dazu eingerichtet ist, eines der zuvor genannten Verfahren durchzuführen. Die erzielbaren Vorteile entsprechen den im Zusammenhang mit den Verfahren beschriebenen.

Im Folgenden wird die Erfindung anhand von Ausführungsbeispielen mit Hilfe von drei Figuren näher erläutert.

Die Figuren zeigen:
- Fig. 1: ein Prinzipschaltbild eines Ausschnitts eines netzfehlertoleranten Wechselrichters,
- Fig. 2: verschiedene, in Diagrammen dargestellte Beispiele der Ausgangsspannung einer Brückenanordnung bei unterschiedlichen Ansteuermustern und Aussteuergraden und
- Fig. 3: ein Flussdiagramm eines Verfahrens zum Betreiben eines Wechselrichters.

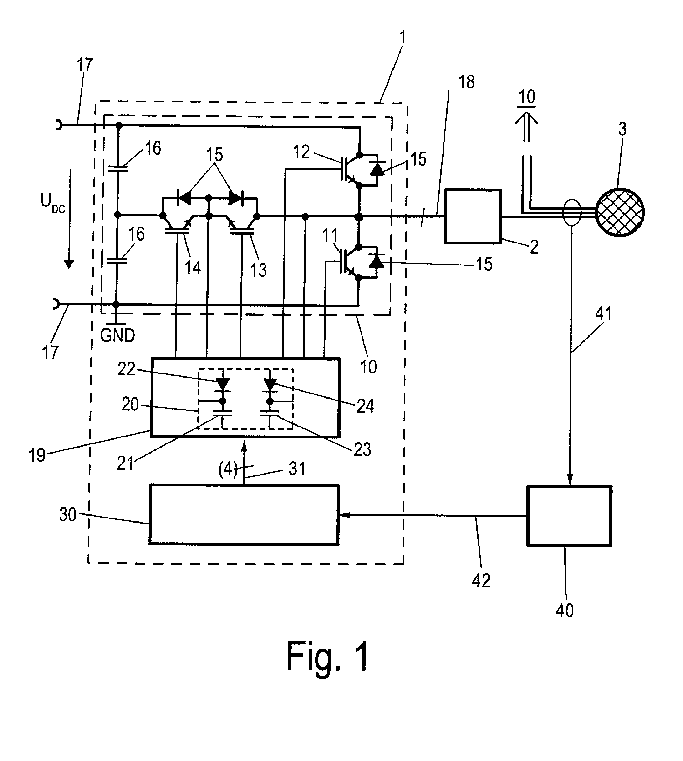

Fig. 1 zeigt einen Ausschnitt eines Wechselrichters 1 zur Einspeisung von elektrischer Leistung in ein Energieversorgungsnetz 3 in einem Prinzipschaltbild. Der Wechselrichter 1 kann beispielsweise Teil einer Photovoltaikanlage sein. Zwischen dem Wechselrichter 1 und dem Energieversorgungsnetz 3 ist ein Filter 2 angeordnet, der eine Kombination von induktiven und kapazitiven Elementen umfassen kann. Der Filter 2 formt einen möglichst sinusförmigen Spannungsverlauf und wird aus diesem Grund auch als Sinusfilter 2 bezeichnet. Der Sinusfilter 2 kann, wie in der Figur dargestellt, als ein separates Element ausgeführt sein oder alternativ auch in den Wechselrichter 1 integriert sein.

Es wird angemerkt, dass weitere, in der Figur nicht dargestellte Elemente zwischen dem Wechselrichter 1 und dem Energieversorgungsnetz 3 vorgesehen sein können. Solche Elemente können beispielsweise Schalt- oder Sicherungsorgane sein.

Der Wechselrichter 1 ist zur Einspeisung in das Energieversorgungsnetz 3 auf drei Phasen ausgelegt. Die Anzahl von drei Phasen ist lediglich beispielhaft zu verstehen; ein anmeldungsgemäßer Wechselrichter und ein anmeldungsgemäßes Verfahren können ebenso für einen Betrieb mit einer beliebigen Anzahl an Phasen, insbesondere einen einphasigen Betrieb geeignet sein.

Entsprechend der Anzahl von drei Phasen weist der Wechselrichter 1 drei Brückenanordnungen auf. Aus Gründen der Übersichtlichkeit in der Figur nur eine Brückenanordnung 10 dargestellt. Die nicht gezeigten Brückenanordnungen sind grundsätzlich analog zu der dargestellten ausgeführt, wobei jedoch einige der Komponenten (z.B. die Kondensatoren 16, s.u.) nicht in allen Brückenanordnungen vorhanden sein müssen, sondern gemeinsam von allen Brückenanordnungen genutzt werden können.

Die Brückenanordnung 10 ist über zwei Eingänge 17 mit einer Gleichstromquelle verbunden und wird von dieser mit einer Gleichspannung U_{DC} (DC - direct current) beaufschlagt. Beim Einsatz des Wechselrichters 1 in einer Photovoltaikanlage ist die Gleichstromquelle ein Photovoltaikgenerator, der entweder direkt oder indirekt unter Zwischenschaltung eines Gleichspannungswandlers mit dem Wechselrichter verbunden ist.

Wechselstromseitig ist die Brückenanordnung 10 über einen Ausgang 18 mit dem Sinusfilter 2 und damit einer Phase des Energieversorgungsnetzes 3 verbunden. Die weiteren beiden Phasen des Energieversorgungsnetzes 3 sind wie in der Fig.1 angedeutet mit den weiteren, nicht dargestellten Brückenanordnungen 10 des Wechselrichters 1 verbunden. Auch dabei sind in der Figur nicht dargestellte Sinusfilter vorgesehen. Es ist auch möglich, für alle Phasen gemeinsamen einen geeigneten mehrphasigen Sinusfilter einzusetzen.

Das Ausgangssignal des Wechselrichters 1 ist ein getaktetes Gleichspannungssignal, wobei die Taktfrequenz, also die Zahl der Schaltzyklen pro Sekunde, im Bereich von einem Kilohertz bis zu einigen 10 Kilohertz liegen kann. Parallel zu den Eingängen 17 des Wechselrichters 1 ist eine als Halbbrücke ausgestaltete Brückenanordnung vorgesehen, die zwei in Serie geschaltete Brückenschalter 11 und 12 aufweist, denen jeweils eine Freilaufdiode 15 zugeordnet ist. Der Mittelabgriff zwischen den Brückenschaltern 11 und 12 bildet den Ausgang 18. Mit den Brückenschaltern 11 und 12 kann der Ausgang 18 mit dem negativen oder dem positiven Potential an den Eingängen 17 beaufschlagt werden. Beispielhaft sind IGBTs (Insulated Gate Bipolar Transistors) als Brückenschalter 11 und 12 eingesetzt. Es können jedoch auch andere Leistungshalbleiterschalter eingesetzt werden, beispielsweise Bipolartransistoren oder MOSFETs (Metal Oxide Semiconductor Field-Effect Transistors). Je nach verwendetem Transistortyp kann die antiparallel zur Schaltstrecke des Transistors angeordnete Freilaufdiode 15 als separates Bauelement ausgeführt sein oder kann bereits in den Transistor integriert sein. Ebenfalls parallel zu den Eingängen 17 sind zwei in Reihe geschaltete Kondensatoren 16 angeordnet. Der Mittelabgriff zwischen den Kondensatoren 16 ist mit dem Ausgang 18 über ein aus zwei weiteren Brückenschaltern 13 und 14 aufgebauten bidirektionalen Schalter verbunden. Auch hier sind Freilaufdioden 15 parallel geschaltet. Die Kondensatoren 16 dienen zum einen der Glättung der Eingangsspannung U_{DC} bei einer gepulsten Stromentnahme durch den Wechselrichter 1. Zum anderen stellt sich an ihrem Mittelabgriff ein virtuelles Nullpotential ein, das zwischen den Potentialen an den Eingängen 17 liegt und mit dem der Ausgang 18 über die weiteren Brückenschaltern 13 und 14 bzw. die zugeordneten Freilaufdioden 15 verbunden werden kann.

Wegen der Möglichkeit, abhängig von dem Schaltzustand der Brückenschalter 11-14 am Ausgang 18 drei verschiedene Spannungsniveaus einzustellen, wird diese Brückenanordnung auch als 3-level Topologie bezeichnet, bzw. genauer als "3-Level Neutral-Point Clamped Converter" (3L-NPC).

Zur Ansteuerung der Brückenschalter 11-14 ist für jede Brückenanordnung 10 eine Ansteuerschaltung 19 vorgesehen, die unter anderem eine sogenannte Bootstrap-Schaltung 20 mit Bootstrap-Kondensatoren 21, 23 und Bootstrap-Dioden 22, 24 aufweist. Als Wechselrichter-internes Bezugspotential GND wird üblicherweise das negative Potential an den Eingängen 17 gewählt. Zur Ansteuerung der Brückenschalter 11-14 wird ein Potential an deren Schalteingang (Gate) benötigt, das einige Volt über dem Potential an ihrem negativen Anschluss (Emitter) liegt. Dieses ist unproblematisch bei dem Brückenschalter 11, der mit seinem negativen Anschluss auf GND-Potential liegt und daher auch als low-side Brückenschalter bezeichnet wird. Bei den Brückenschaltern 12 - 14 liegt der negativen Anschluss jedoch auf einem gegenüber dem GND-Potential um U_{DC}/2 höheren Potential, weswegen diese Brückenschalter 12 - 14 auch als high-side Brückenschalter bezeichnet werden. Das zum Schalten notwendige Potential wird durch die Bootstrap-Schaltung 20 in den Zeiträumen mit eingeschaltetem low-side Brückenschalter 11 in den Bootstrap-Kondensatoren 21, 23 aufgebaut, indem diese abwechselnd über ein Referenzpotential, die Bootstrap-Dioden 22, 24 und den low-side Brückenschalter 11 geladen werden und dann auf das Potential am negativen Anschluss der high-side Brückenschalter 12 - 14 aufgeschaltet werden.

Weiter ist eine Pulsweiten-Modulationsschaltung 30 vorgesehen, die Ansteuersignale an Steuerausgängen 31 für die Brückenschalter 11 - 14 derart generiert, dass ein vorgegebener Verlauf einer Referenzspannung nachgebildet wird, die aus einem Verlauf der Netzspannung des Energieversorgungsnetzes 3 gebildet wird. Damit folgt der am Ausgang 18 des Wechselrichters 1 ausgegebene und über den Sinusfilter 3 geglättete Spannungsverlauf dem der Netzspannung; der Wechselrichter 1 ist netzsynchron.

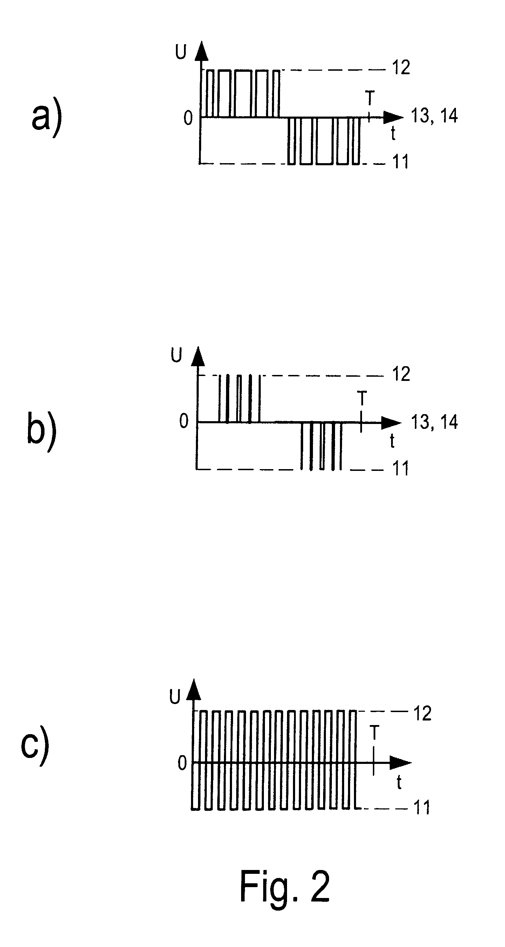

Fig. 2a stellt beispielhaft einen Verlauf einer Ausgangsspannung U am Ausgang 18 der Brückenanordnung 10, d.h. am Eingang des Sinusfilters 2, dar. Der gezeigte Verlauf wird durch ein entsprechendes Ansteuermuster für die vier Schalter 11 - 14 von der Pulsweiten-Modulationsschaltung 30 an den Steuerausgängen 31 generiert. Gezeigt ist die Abhängigkeit der Ausgangsspannung U von einer Zeit t für die Dauer T einer Periode der Netzfrequenz.

Der Kurvenverlauf ergibt sich aus den Schaltzuständen der Brückenschalter 11 - 14, d.h. abhängig davon, ob der Brückenschalter 11, der Brückenschalter 12 oder einer der Brückenschalter 13 bzw. 14 leitend ist.

Die Fig. 2a zeigt eine Ansteuerung bei einer 3-Level-Modulation mit einem hohen Aussteuergrad, wie sie im Einspeisebetrieb bei voller Netzspannung vorliegt. Da innerhalb jeder Halbwelle der Netzspannung, d.h. in den Zeiträumen 0<t<=T/2 und T/2<t<=T, jeweils komplementär zu den Brückenschaltern 13 bzw. 14 nur entweder der Brückenschalter 11 oder der Brückenschalter 12 leitend ist, wird die Ansteuerung auch als unipolar bezeichnet. Die Zeiten, in denen der low-side Brückenschalter 11 leitend ist, sind im Mittel ausreichend lang, um in den Bootstrapkondensatoren 21, 23 eine ausreichende Ladungsmenge aufzubauen, so dass die high-side Brückenschalter 12 - 14 in der folgenden Halbwelle angesteuert werden können.

Fig. 2b stellt in gleicher Weise wie Fig. 2a einen Verlauf der Ausgangsspannung U der Brückenanordnung 10 dar, wobei hier eine Ansteuerung bei einer 3-Level-Modulation mit einem niedrigen Aussteuergrad verwendet wird. Eine solche Situation ergibt sich nach dem Stand der Technik bei geringer Netzspannung, zum Beispiel bei einem Netzspannungseinbruch bei einem Netzfehler. Die Zeiten, in denen der low-side Brückenschalter 11 leitend ist, sind hier nicht ausreichend, um in den Bootstrapkondensatoren eine ausreichende Ladungsmenge aufzubauen, so dass die high-side Brückenschalter in der folgenden Halbwelle nicht gesichert angesteuert werden können.

Bei dem anmeldungsgemäßen Betriebsverfahren für einen Wechselrichter ist vorgesehen, in einem solchen Fehlerfall von der unipolaren Ansteuerung auf eine bipolare Ansteuerung einer 2-Level-Modulation umzuschalten. Ein entsprechender Verlauf der Ausgangsspannung U aufgrund eines bipolaren Ansteuermusters ist, wiederum in gleicher Weise wie in den Fig. 2a und 2b, in der Fig. 2c wiedergegeben. Bei der bipolaren Ansteuerung werden die Brückenschalter 13, 14 nicht leitend geschaltet, wohingegen die Brückenschalter 11, 12 abwechselnd leitend geschaltet werden. Die mittlere Höhe der Ausgangsspannung ergibt sich aus dem Zeitverhältnis der Einschaltdauern der beiden Brückenschalter 11, 12, auch Tastverhältnis genannt. Bei nur geringer Ausgangsspannung weicht das Tastverhältnis nur wenig von dem Wert 1:1 ab. Pro Taktperiode ist also der low-side Brückenschalter 11 im Mittel in etwa für die Dauer einer halbe Taktperiode leitend. Damit resultiert die bipolare Ansteuerung auch bei geringem Aussteuergrad in im Mittel ausreichend langen Zeiten zur Ladung der Bootstrap-Kondensatoren 21, 23.

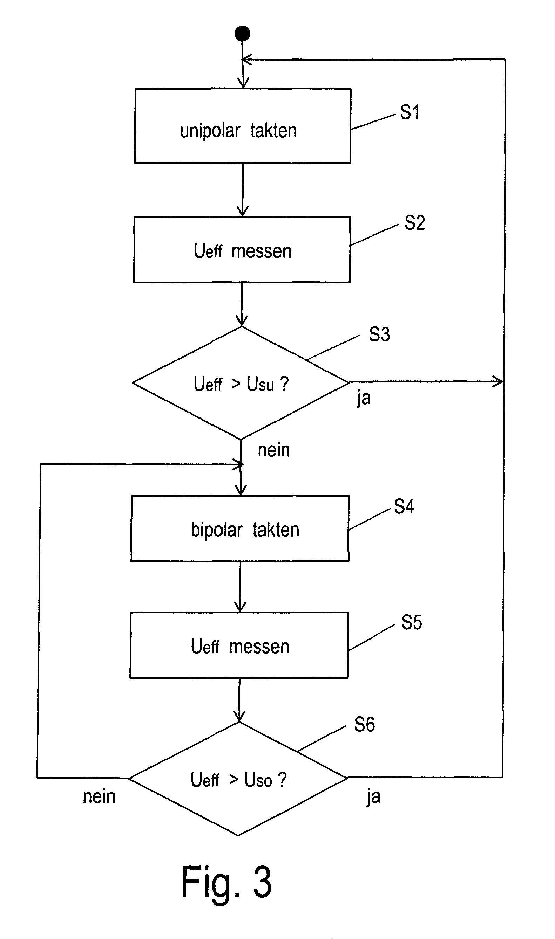

Fig. 3 zeigt eine Ausgestaltung eines Betriebsverfahren für einen Wechselrichter schematisch in einem Flussdiagramm, wie es beispielsweise von dem in Fig. 1 gezeigten Wechselrichter 1 ausgeführt werden kann. Im Folgenden wird das Verfahren beispielhaft mit Bezug auf Fig. 1 beschrieben. Benutzte Bezugszeichen beziehen sich entsprechend auf Fig. 1.

In einem ersten Schritt S1 des Verfahrens wird zunächst eine unipolare Ansteuerung der Brückenschalter 11-14 einer Brückenanordnung 10 eingestellt. Der Wechselrichter 1 wird mit der unipolaren Ansteuerung betrieben (getaktet). In einem zweiten Schritt S2 wird dann während der unipolaren Ansteuerung eine Effektivspannung Ueff des Energieversorgungsnetzes 3 bestimmt, beispielsweise für die Phase, mit der die entsprechende Brückenschaltanordnung 10 verbunden ist.

In einem nächsten Schritt S3 wird die gemessene Effektivspannung Ueff mit einer ersten vorgegebenen Schwellenwertspannung Usu, auch untere Schwellenwertspannung genannt, verglichen. Falls in dem Schritt S3 festgestellt wurde, dass die Effektivspannung Ueff größer als die erste Schwellenwertspannung Usu ist, verzweigt das Verfahren zurück zu dem Schritt S1. Der Wechselrichter 1 wird also weiter mit unipolarer Ansteuerung betrieben. Falls jedoch in dem Schritt S3 festgestellt wurde, dass die Effektivspannung Ueff kleiner oder gleich der ersten Schwellenwertspannung Usu ist, wird das Verfahren mit einem Schritt S4 fortgesetzt.

In dem Schritt S4 wird eine bipolare Ansteuerung der Brückenschalter 11-14 der Brückenanordnung 10 eingestellt und der Wechselrichter 1 folglich mit dieser bipolaren Ansteuerung der Brückenschalter 11-14 betrieben (getaktet). In einem folgenden Schritt S5 wird dann während der bipolaren Ansteuerung wiederum die Effektivspannung Ueff des Energieversorgungsnetzes 3 bestimmt und in einem nächsten Schritt S6 mit einer zweiten vorgegebenen Schwellenwertspannung Uso, auch obere Schwellenwertspannung genannt, verglichen.

Falls in dem Schritt S6 festgestellt wurde, dass die Effektivspannung Ueff kleiner oder gleich der zweiten Schwellenwertspannung Uso ist, verzweigt das Verfahren zurück zu dem Schritt S4, in dem der Wechselrichter 1 weiter mit bipolarer Ansteuerung betrieben wird. Falls jedoch in dem Schritt S6 festgestellt wurde, dass die Effektivspannung Ueff größer als die zweite Schwellenwertspannung Uso ist, verzweigt das Verfahren zurück zu dem Schritt S1, wodurch wiederum auf die unipolare Ansteuerung umgestellt wird.

Die Schwellenwertspannungen Usu, Uso definieren also Grenzwerte für die Effektivspannung einer Phase des Energieversorgungsnetzes 3, die zur Erkennung eines Netzfehlers herangezogen werden. Während ein derart definierter Netzfehler erkannt wird, wird auf die bipolare Ansteuerung der Brückenschalter umgestellt. Die zweite Schwellenwertspannung Uso ist dabei bevorzugt (leicht) größer als die erste Schwellenwertspannung Usu, wodurch eine Umschalthysterese erreicht wird. Diese verhindert einen unkontrollierten Wechsel zwischen der unipolare und der bipolaren Ansteuerung, falls die Höhe der Effektivspannung Ueff gerade im Bereich der Schwellenwerte liegt. Es wird angemerkt, dass das Vorliegen eines Netzfehlers im Sinne der Anmeldung ebenso wie die Höhe der Schwellenwertspannungen Usu, Uso im Hinblick auf eine ausreichende Aufladung der Bootstrap-Kondensatoren 21, 23 definiert sind. Nichtsdestotrotz kann die Definition, unter welchen Umständen im Sinne des anmeldungsgemäßen Verfahrens ein Netzfehler vorliegt, mit anderen Definitionen für Netzfehler, z. B. aus Netzanschlussrichtlinien, übereinstimmen.

In der in Fig. 3 dargestellten Ausgestaltung des Verfahrens ist demnach vorgesehen, für die gesamte Dauer eines Netzfehlers von der unipolaren auf die bipolare Ansteuerung umzuschalten. Alternativ kann vorgesehen sein, für die Dauer des Netzfehlers ständig zwischen einer unipolaren und einer bipolaren Ansteuerung umzuschalten. Dabei können die Intervalle, in denen die eine oder andere Ansteuerung vorliegt, so kurz wie eine Periodendauer des PWM-Verfahrens selbst sein, oder auch beliebig länger gewählt werden, wobei eine Obergrenze für die Intervalllänge der unipolaren Ansteuerung durch die genannten Probleme beim Stand der Technik limitiert ist. Es kann vorgesehen sein, in Intervallen, in denen die effektive Ausgangsspannung des Wechselrichters 1 bei unipolarer Ansteuerung gleich null ist, bipolare Takte mit einem Tastverhältnis von genau 1:1 einzufügen, wodurch die Aufladung der Bootstrap-Kondensatoren sichergestellt wird. Alternativ kann durch ein vom Wert 1:1 abweichendes Tastverhältnis erreicht werden, dass auch in den Intervallen der bipolaren Ansteuerung effektive Ausgangsspannungen ungleich null erzielt werden können.

Zur Durchführung eines der genannten Verfahren ist bei dem in Fig. 1 dargestellten Wechselrichter 1 eine Netzüberwachungseinrichtung 40 vorgesehen, die über einen Referenzsignal-Eingang 41 mit dem Energieversorgungsnetz 3 verbunden ist, wobei dieses mittels eines zwischengeschalteten Übertragungsnetzwerkes geschehen kann. Die Netzüberwachungseinrichtung 40 überwacht zumindest die Zeitverläufe der Spannungen des Energieversorgungsnetzes 3 und detektiert anhand von vorgegebenen, ggf. normierten Kriterien, einen Netzfehlerfall. Der Netzfehlerfall wird über ein Fehlersignal an einem Fehlersignal-Ausgang 42 signalisiert. Die Netzüberwachungseinrichtung 40 kann in den Wechselrichter 1 integriert sein, oder aber auch eine separate, ggf. zentrale Einrichtung sein.

Der Fehlersignal-Ausgang 42 ist mit der Pulsweiten-Modulationsschaltung 30 verbunden, wobei diese dazu eingerichtet ist, in Abhängigkeit des Fehlersignals von einer unipolaren auf eine bipolare Ansteuerung der Brückenanordnung umzuschalten. Diese Umschaltung kann gemäß der oben beschriebenen unterschiedlichen Ausgestaltungen des Verfahrens dauerhaft für die Zeitdauer eines Netzfehlers geschehen, oder während der Zeitdauer des Netzfehlers alternierend.

Alternativ zu dem in der Fig. 1 wiedergegebenen Aufbau können auch zwei separate Pulsweiten-Modulationsschaltungen vorhanden sein, eine für die unipolare und eine für die bipolare Ansteuerung, wobei eine Umschalteinheit abhängig von dem Fehlersignal die Ansteuersignale der einen oder der anderen Pulsweiten-Modulationsschaltung an die Bootstrap-Schaltung weitergibt.

### Bezugszeichenliste

- 1: Wechselrichter
- 2: Sinusfilter
- 3: Energieversorgungsnetz

- 10: Brückenanordnung
- 11-14: Brückenschalter
- 15: Freilaufdiode
- 16: Kondensator
- 17: DC-Eingang
- 18: 1-Phasen AC-Ausgang

- 19: Ansteuerschaltung
- 20: Bootstrap-Schaltung
- 21, 23: Bootstrap-Kondensator
- 22, 24: Bootstrap-Diode

- 30: Pulsweiten-Modulationsschaltung
- 31: Steuerausgang

- 40: Überwachungseinrichtung
- 41: Referenzeingang
- 42: Fehlersignal-Ausgang

## Patentansprüche

1. Verfahren zum Betreiben eines Wechselrichters (1) mit mindestens einer moduliert ansteuerbaren Brückenanordnung (10) zur Einspeisung von elektrischer Leistung in ein Energieversorgungsnetz (3) mit den folgenden Schritten:
- Betreiben des Wechselrichters (1) durch unipolares Ansteuern der mindestens einen Brückenanordnung (10);
- Überwachen des Energieversorgungsnetzes (3) auf das Vorliegen eines Netzfehlers und
- Zumindest zeitweises Betreiben des Wechselrichters (1) durch bipolares Ansteuern der mindestens einen Brückenanordnung (10), falls ein Netzfehler detektiert wird.

2. Verfahren nach Anspruch 1, bei dem der Wechselrichter (1) für einen Zeitraum, währenddessen das Vorliegen des Netzfehlers detektiert wird, durch bipolares Ansteuern der mindestens einen Brückenanordnung (10) betrieben wird.

3. Verfahren nach Anspruch 1, bei dem der Wechselrichter (1) für einen Zeitraum, währenddessen das Vorliegen des Netzfehler detektiert wird, alternierend durch unipolares und bipolares Ansteuern der mindestens einen Brückenanordnung (10) betrieben wird.

4. Verfahren nach einem der Ansprüche 1 bis 3, bei dem die bipolare Ansteuerung zumindest zeitweise mit einem Tastverhältnis von 1:1 erfolgt.

5. Verfahren nach einem der Ansprüche 1 bis 4, bei dem die unipolare Ansteuerung aus einer 3-Level-Modulation resultiert.

6. Verfahren nach einem der Ansprüche 1 bis 5, bei dem das Vorliegen des Netzfehlers abhängig von einer Höhe eines Effektivwertes (Ueff) einer Netzspannung des Energieversorgungsnetzes (3) detektiert wird.

7. Verfahren nach Anspruch 6, bei dem ein Netzfehler detektiert wird, sobald der Effektivwert (Ueff) eine erste Schwellenwertspannung (Usu) unterschreitet.

8. Verfahren nach Anspruch 7, bei dem ein Netzfehler detektiert wird, solange der Effektivwert (Ueff) eine zweite Schwellenwertspannung (Uso) unterschreitet, wobei die zweite Schwellenwertspannung (Uso) oberhalb der ersten Schwellenwertspannung (Usu) liegt.

9. Netzfehlertoleranter Wechselrichter (1) zur Einspeisung von elektrischer Leistung in ein Energieversorgungsnetz (3), aufweisend
- mindestens eine Brückenanordnung (10) mit Brückenschaltern (11-14);
- mindestens eine Bootstrap-Schaltung (20) mit einem Bootstrap-Kondensator (21, 23) zum Bereitstellen von Energie zur Ansteuerung von mindestens einem der Brückenschalter (11-14);
- eine Pulsweiten-Modulationsschaltung (30) zum wahlweise unipolaren oder bipolaren Ansteuern der mindestens einen Brückenanordnung (10) und
- eine Überwachungseinrichtung (40) zur Detektion von Netzfehlern,
wobei der Wechselrichter (1) dazu eingerichtet ist, ein Verfahren nach einem der Ansprüche 1 bis 8 durchzuführen.

## Claims

1. A method for operating an inverter (1) having at least one bridge arrangement (10) that can be actuated in a modulated manner for feeding electrical power into a power supply grid (3), the method comprising the following steps:
- operating the inverter (1) by means of unipolar actuation of the at least one bridge arrangement (10);
- monitoring the power supply grid (3) for the presence of a grid fault and
- at least temporarily operating the inverter (1) by means of bipolar actuation of the at least one bridge arrangement (10) if a grid fault is detected.

2. The method as claimed in claim 1, in which the inverter (1) is operated by means of bipolar actuation of the at least one bridge arrangement (10) for a period of time during which the presence of the grid fault is detected.

3. The method as claimed in claim 1, in which the inverter (1) is alternately operated by means of unipolar and bipolar actuation of the at least one bridge arrangement (10) for a period of time during which the presence of the grid fault is detected.

4. The method as claimed in one of claims 1 to 3, in which the bipolar actuation at least temporarily operates at a duty ratio of 1:1.

5. The method as claimed in one of claims 1 to 4, in which the unipolar actuation results from a three-level modulation.

6. The method as claimed in one of claims 1 to 5, in which the presence of the grid fault is detected as a function of a level of an rms value (Ueff) of a grid voltage of the power supply grid (3).

7. The method as claimed in claim 6, in which a grid fault is detected as soon as the rms value (Ueff) is below a first threshold voltage (Usu).

8. The method as claimed in claim 7, in which a grid fault is detected as long as the rms value (Ueff) is below a second threshold voltage (Uso), wherein the second threshold voltage (Uso) is above the first threshold voltage (Usu).

9. A grid fault tolerant inverter (1) for feeding electrical power into a power supply grid (3), the inverter comprising:
- at least one bridge arrangement (10) with bridge switches (11-14);
- at least one bootstrap circuit (20) comprising a bootstrap capacitor (21, 23) for providing power to actuate at least one of the bridge switches (11-14);
- a pulse-width modulation circuit (30) for selectively either unipolar or bipolar actuation of the at least one bridge arrangement (10) and
- a monitoring device (40) for detecting grid faults, wherein the inverter (1) is designed to implement a method as claimed in one of claims 1 to 8.

## Revendications

1. Procédé pour commander un onduleur (1) comprenant au moins un agencement de pont (10) pouvant être commandé de manière modulée pour injecter une puissance électrique dans un réseau d'alimentation en puissance (3), comprenant les étapes suivantes
- fonctionnement de l'onduleur (1) par pilotage unipolaire de l'au moins un agencement de pont (10) ;
- surveillance du réseau d'alimentation en puissance (3) pour détecter la présence d'une panne de réseau et
- fonctionnement au moins temporaire de l'onduleur (1) par pilotage bipolaire de l'au moins un agencement de pont (10) en cas de détection d'une panne de réseau.

2. Procédé selon la revendication 1, dans lequel l'onduleur (1) est commandé par pilotage bipolaire de l'au moins un agencement de pont (10) pendant un intervalle pendant lequel la présence de la panne de réseau est détectée.

3. Procédé selon la revendication 1, dans lequel l'onduleur (1) est commandé en alternance par pilotage unipolaire et bipolaire de l'au moins un agencement de pont (10) pendant un intervalle pendant lequel la présence de la panne de réseau est détectée.

4. Procédé selon l'une quelconque des revendications 1 à 3, dans lequel le pilotage bipolaire s'effectue au moins temporairement avec un rapport cyclique de 1:1.

5. Procédé selon l'une quelconque des revendications 1 à 4, dans lequel le pilotage unipolaire résulte d'une modulation de niveau 3.

6. Procédé selon l'une quelconque des revendications 1 à 5, dans lequel la présence de la panne de réseau est détectée en fonction d'une hauteur d'une valeur efficace (Ueff) d'une tension de réseau du réseau d'alimentation en puissance (3).

7. Procédé selon la revendication 6, dans lequel une panne de réseau est détectée dès que la valeur efficace (Ueff) devient inférieure à une première tension de valeur seuil (Usu).

8. Procédé selon la revendication 7, dans lequel une panne de réseau est détectée tant que la valeur efficace (Ueff) est en dessous d'une deuxième tension de valeur seuil (Uso), la deuxième tension de valeur seuil (Uso) étant supérieure à la première tension de valeur seuil (Usu).

9. Onduleur (1) à tolérance des pannes de réseau pour injecter une puissance électrique dans un réseau d'alimentation en puissance (3), présentant :
- au moins un agencement de pont (10) avec des interrupteurs de pont (11-14) ;
- au moins un circuit d'amorçage (20) avec un condensateur d'amorçage (21, 23) pour fournir de l'énergie pour piloter au moins l'un des interrupteurs de pont (11-14) ;
- un circuit de modulation de largeur d'impulsion (30) pour le pilotage unipolaire ou bipolaire sélectif de l'au moins un agencement de pont (10), et
- un dispositif de surveillance (40) pour détecter des pannes de réseau,
l'onduleur (1) étant prévu pour mettre en oeuvre un procédé selon l'une quelconque des revendications 1 à 8.
